# EUROPEAN PATENT APPLICATION

(11) **EP 3 958 155 A1**
(43) Date of publication of application: **23.02.2022**
(21) Application number: 21191752.1
(22) Date of filing: 17.08.2021
(51) Int. Cl.: G06F 21/57

(54) **KNOWLEDGE GRAPH ENHANCEMENT BY PRIORITIZING CARDINAL NODES**

(30) Priority: 17.08.2020 US 202016995382
(71) Applicant: Accenture Global Solutions Limited, Dublin 4 (IE)
(72) Inventor: HADAR, Eitan, 3686210 Nesher (IL); BASOVSKIY, Alexander, 4528254 Hod Ha'sharon (IL)
(74) Representative: Swindell & Pearson Limited

(57) **Abstract**

This document describes knowledge graph systems that determine cardinal nodes in a knowledge graph that provide the most impact on target nodes of a system and improves the system by adjusting the impact of the actual elements represented by the cardinal nodes. In one aspect, a method includes obtaining a knowledge graph that represents a given system and that includes multiple nodes that each represent an element of the given system. One or more target nodes are identified in the knowledge graph based on a value parameter for each node in the knowledge graph. A cardinal value that represents an impact that the node has on the one or more target nodes is determined for each node in the knowledge graph. A priority order of the nodes is determined for improvement based on the cardinal values. Data indicating one or more of the nodes is provided based on the order.

## Description

### TECHNICAL FIELD

This specification relates to using knowledge graphs to determine cardinal nodes that provide the most impact on high value (target) nodes of a system and improving the systems by adjusting the impact of the actual elements represented by the cardinal nodes.

### BACKGROUND

A knowledge graph is a representation of a real-life knowledge, problem, or other condition in the form of a graph. The knowledge graph includes nodes that represent the elements (e.g., real objects or notions) and edges between nodes. Each edge represents a relationship between a pair of nodes in the knowledge graph.

### SUMMARY

This specification generally describes a knowledge graph system that determines cardinal nodes that provide the most impact on target nodes of a system and improves the system by adjusting the impact of the actual elements represented by the cardinal nodes.

In general, one innovative aspect of the subject matter described in this specification can be embodied in methods that include the actions of obtaining a knowledge graph that represents a given system and that includes multiple nodes that each represent an element of the given system; identifying, in the knowledge graph, one or more target nodes based on a value parameter for each node in the knowledge graph; determining, for each node in the knowledge graph, a cardinal value that represents an impact that the node has on the one or more target nodes; determining, based on the cardinal values, a priority order of the nodes for improvement; and providing data indicating one or more of the nodes based on the priority order. Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other embodiments can each optionally include one or more of the following features, alone or in combination. Some aspects include performing an action to improve a given element of the given system represented by one of the one or more nodes based on the priority order of the nodes.

In some aspects, the given system includes a computer network and each element includes a computing element in the computer network. Performing the action can include installing security software on the computing device represented by the given node. In some aspects, the impact that the node has on the one or more target nodes represents a likelihood of a malicious party reaching the element represented by each target node by traversing the element represented by the node.

In some aspects, the cardinal value for each node is based on a measure of hardness representing a difficulty of traversing the element represented by the node to get to the element represented by each target node. The cardinal value for each node can be based on the measure of hardness for the node and one or more centrality measures for the node. The one or more centrality measures can include at least one of degree centrality, eigenvector centrality, Katz centrality, or betweenness centrality. Determining the cardinal value for each node can include determining an average of the measure of hardness for the node and each of the one or more centrality measures for the node.

In some aspects, identifying the one or more target nodes includes selecting, as the one or more target nodes, each node that has a value parameter that exceeds a threshold. Identifying the one or more target nodes can include selecting, as the one or more target nodes, a specified number of nodes having higher value parameters than each other node.

The subject matter described in this specification can be implemented in particular embodiments and may result in one or more of the following advantages. Knowledge graphs that represent real world systems can be used to determine cardinal elements of the system that affects (or has the potential to affect) high value target elements of the system. These cardinal nodes can be prioritized for improvement to improve the effect on the high value target nodes. For example, by identifying the nodes that represent computing devices that make critical servers of a network most vulnerable, the computing devices can be prioritized for security updates or reworking of the network to prevent malicious parties from attacking the critical server via the vulnerable computing device. By prioritizing the nodes (and their represented elements) based on their potential to affect high value targets, the overall condition or vulnerabilities of the system can be improved more efficiently. In addition, a combination of a graph that is built as all pathways to targets, centrality measures, and measures of hardness that represent an acceleration of progressing towards the targets can be used to provide a more holistic approach to the prioritization that takes into account the ability to affect a high value target node by way of each other node. Graph relaxation techniques can be used to reduce the overall cardinal value of the knowledge graph, and therefore reduces the vulnerability of the high value target nodes. For computer networks, this reduction in the overall cardinal value represents a reduction in the overall cybersecurity risk of the network.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is an example of an environment in which a knowledge graph system generates knowledge graphs and evaluates the knowledge graphs to determine cardinal nodes that provide the most impact on target nodes of a system.
FIG. 2 is a flow diagram of an example process for determining cardinal nodes that provide the most impact on target nodes of a system.
FIG. 3 is a flow diagram of an example process for determining a cardinal value for a node in a knowledge graph.
FIG. 4 is a block diagram of a computing system that can be used in connection with computer-implemented methods described in this document.

Like reference numbers and designations in the various drawings indicate like elements.

### DETAILED DESCRIPTION

This specification generally describes a knowledge graph system that determines nodes that provide the most impact on target nodes and improve the knowledge graphs by adjusting the impact of the actual element represented by the node. A knowledge graph can represent a real world system, such as a computer network, roadways in a geographic area, or a population of people during an epidemic outbreak. The nodes of the knowledge graph can represent the real world elements in the system, e.g., computing devices in a computer network, roads in the geographic area, or people in the population. The edges between the nodes can represent the relationships between the real world elements, e.g., pathways between pairs of elements and the characteristics of the pathways.

The knowledge graph system can evaluate the knowledge graph to determine which nodes have the most impact on a condition of the system, e.g., the nodes that make the target nodes most vulnerable within the system. In the computer network example, this can include determining which computing device is the most vulnerable and that would compromise the rest of the network or compromise one or more high value computers within the network. This can be resolved by improving the security of the computing device, e.g., automatically installing a security patch at the computing device, adjusting user permissions configurations, adjusting firewall rules at the computing device or elsewhere in the network, or removing the computing device from the network. The knowledge graph can then be updated based on the update to the network, resulting in an enhanced knowledge graph that represents an improved system.

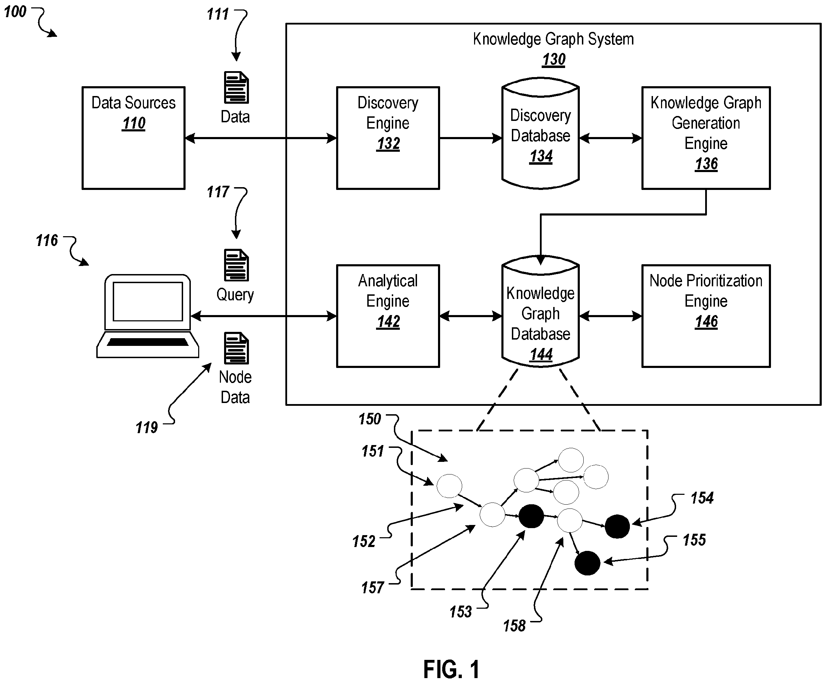

FIG. 1 is an example of an environment 100 in which a knowledge graph system 130 generates knowledge graphs and evaluates the knowledge graphs to determine cardinal nodes that provide the most impact on target nodes of a system. The knowledge graph system 130 includes a discovery engine 132, a discovery database 134, a knowledge graph generation engine 136, an analytical engine 142, a knowledge graph database 144, and a node prioritization engine 146. The knowledge graph system 130 can be implemented by one or more computers that include the engines and databases. Although the knowledge graph system 130 can be used for many different types of systems (e.g., computer networks, roadways, and outbreaks), the knowledge graph system 130 will be described largely using a computer network as an example.

The discovery engine 132 collects data 111 that can be used to generate a knowledge graph that represents a system and stores the data in the discovery database 134. The discovery engine 132 can provide an Application Programing Interface (API) that enables access to the raw data. The discovery engine 132 can collect the data 111 from various data sources 110. These data sources 110 can include other internal organization databases, open Internet resources, specialized commercial databases, and/or other appropriate data sources. For a computer network, the data sources 110 can include agents running on at least some of the network's computing devices to collect data 111 and provide the data 111 to the discovery engine 132. The data 111 can include, for example, data indicating network paths between computing devices, the type of each computing device, security software installed on each computing device, versions of software and/or hardware of each computing device, etc.

The discovery engine 132 can collect and pre-process the raw data and store the pre-processed raw data in the discovery database 134. This pre-processing can include cleaning the data and unifying the data. For example, the discovery engine 132 can receive data for each computing device in a network, put the data for each computing device in a common format, and store the data in the discovery database 134.

The knowledge graph generation engine 136 generates a knowledge graph that represents the system based on the data stored in the discovery database 134. In some implementations, the discovery engine 132 can notify the knowledge graph generation engine 136 when the data is ready for the knowledge graph to be generated, e.g., via a message bus that connects the knowledge graph generation engine 136 and the discovery engine 132.

The knowledge graph generation engine 136 can query the discovery database 134 to obtain the data for building the knowledge graph. The knowledge graph generating engine 136 can use one or more of several techniques to generate the knowledge graph. One technique is a rule-based technique in which users (e.g., system experts) define rules that describe the real world system that will be represented by the knowledge graph. For example, in a cybersecurity domain, cyber researches can define lateral movement rules that reflect how a malicious party (e.g., a hacker) may take control over a computing device. A prolog-based engine or another appropriate engine can apply the rules to the data in the discovery database 134 to generate the knowledge graph.

Another example technique is an ontology-based technique in which the knowledge graph generation engine 136 generates the knowledge graph using the data in the discovery database 134 and a specified ontology. The ontology can be metadata of the knowledge graph and can define the kind of entities and relationships may exist in the knowledge graph. The ontology can also define the kind of relationships that are valid between every pair of entities, which the knowledge graph generation engine 136 can use to generate the edges between the nodes in the knowledge graph.

Another example technique is a machine learning-based technique. In this approach, the knowledge graph generation engine 136 can use one or more machine learning models to generate the knowledge graph based on the data in the discovery database 134. This approach can be especially advantageous when the data includes unstructured or semi-structured text, images, and/or videos.

Once generated, the knowledge graph generation engine 136 can store the knowledge graph and its node properties in the knowledge graph database 144, which can be a graph database management system. In some implementations, the knowledge graph system 130 can receive pre-generated knowledge graphs from another computing system or other entity. That is, the knowledge graph system 130 can evaluate knowledge graphs from other sources, not just the ones generated by the knowledge graph generation engine 136.

An example, knowledge graph 150 illustrated in FIG. 1. This knowledge graph 150 includes nodes 151 represented by circles and edges 152 represented by arrows. As described in more detail below, the knowledge graph 150 includes regular nodes (without shading), a cardinal node 153, and target nodes 154 and 155. The knowledge graph 150 will be used as an example for the remaining description of FIG. 1, although the techniques can be applied to knowledge graphs having different arrangements, sizes, numbers of nodes, different edges, etc.

The knowledge graph 150 and its nodes 151 include some corresponding parameters. Each node 151 can have one or more cardinality parameters with values that represent the potential impact that the node 151 has on one or more target nodes. The cardinality parameter can be based on how easy or hard it is to traverse the node 151 to move towards the target node and one or more measures of centrality of the node with respect to the target node(s). For example, in the case of cybersecurity, the traversal may be lateral movements of a malicious party, such as hops from computer to computer as the malicious party takes control over computers. Using the knowledge graph 150 as an example, the measure of hardness for the node 153 could represent how difficult it would be to move from node 157 across the node 153 to get to node 158 on the way to target nodes 154 and 155 or could represent the acceleration of progressing towards the target nodes 154 and 155. The node prioritization engine 146 can use various approaches to determine the cardinal values for each node 151, as described below.

Each node 151 can also have a value parameter with a value that represents how valuable the element represented by the node 151 is to the overall system represented by the knowledge graph 150. Continuing the cybersecurity example, the value parameter may be expressed in the amount of potential loss (e.g., in terms or data, downtime, or monetary cost) if the computing device is compromised. The target node(s), e.g., the target nodes 154 and 155, are the nodes for the elements having the highest value to the overall system. In a cybersecurity example, the targets may be clearing computers of a stock exchange, production line computers of a manufacturing plant, or a server containing customer records of an e-commerce company. The value of each node can be provided as an input to the knowledge graph system 130, e.g., using a user terminal 116. The analytical engine 142 can select one or more target nodes having a highest value based on this input. In another example, the user can also identify the targets to the knowledge graph system 130 using the user terminal 116.

The knowledge graph 150 can also have an aggregate value parameter that is an aggregate (e.g., sum) of the value parameters of all of the nodes in the knowledge graph 150. In a cybersecurity example, the aggregate value parameter can represent the total potential loss to an organization if its entire computer network is compromised.

Each node 151 can also have a cost parameter with a value that represents a cost to improve the element corresponding to the node. In a cybersecurity example, the cost may be a score assigned by a user (e.g., network security personnel) or an actual monetary cost estimate (e.g., a cost of additional security software or update, or a cost associated with not improving the security of the computing device).

The node prioritization engine 146 can evaluate the knowledge graph 150 and the parameters corresponding to the knowledge graph 150 to determine the cardinal nodes of the knowledge graph 150. Cardinal nodes are the nodes that contribute the most to the value of the knowledge graph when the graph is traversed towards the target nodes. To do so, the node prioritization engine 146 can determine a cardinal value for each node 151 in the knowledge graph 150. As described in more detail below, the cardinal value for each node 151 can be based on how hard it is to traverse the node 151 and one or more centrality measures, such as degree centrality, eigenvector centrality, Katz centrality, betweenness centrality, or any combination of these factors. The node prioritization engine 146 can then select, as the cardinality node(s), one or more nodes having the highest cardinal value(s). In case of other cases, the measure of hardness may be related to acceleration of traversal. For example, the acceleration of traversal in epidemics is "basic reproduction number", R0 at given location. In traffic congestion, the acceleration of traversal may be the average speed at a road segment.

The node prioritization engine 146 can also prioritize the nodes 151 in the knowledge graph 150 based on the cardinal values and in accordance with an objective. In the cybersecurity domain, the node prioritization engine 146 can find the most vulnerable computing devices in the network that compromise the whole network. For example, the node prioritization engine 146 can determine the nodes that make it easier (e.g., faster) for a malicious party to take control of target nodes. This is in contrast to approaches that identify nodes that are easier to take control of on their own.

A user (e.g., network security personnel) may prioritize improving the security of computing devices that, on one hand, pose a higher threat on the target nodes and, on the other hand, are less expensive (e.g., in terms or time, resources, and/or cost) to improve. The objective can be a balance of the two factors, the threat and cost associated with each node 151.

In some implementations, the node prioritization engine 146 can also take into account contextual parameters when prioritizing nodes to improve. For example, improving the security of a computer represented by the node having the highest cardinal value may require shutting down a critical server for a few hours. In this case, the computer may not be the first computing device on the network that is improved based on the cost to the system (e.g., the cost associated with shutting down the critical server for hours).

The node prioritization engine 146 can "relax" the knowledge graph 150 by prioritizing the nodes to be improved and causing the nodes to be improved. Relaxing the knowledge graph 150 means reducing the size and meaning of the knowledge graph 150, e.g., reducing the number of nodes and number of edges and reducing the representative value of the overall attack graph. This can be done according to the most radical change (e.g., fastest decline) and with the most impact on the evaluation of the graph complexity (e.g., aggregate value of the knowledge graph 150).

To do this, the prioritization engine 146 can model the prioritization as either a constrained optimization problem or multi-objective optimization problem. An example constraint optimization problem is minimizing (or at least reducing) the aggregate cardinal value of the knowledge graph 150 subject to cost constraints (e.g., based on the cost for each node). The aggregate cardinal value can be the sum of the cardinal values for the nodes 151 in the knowledge graph 150. An example multi-objective optimization problem is to minimize (or at least reduce) the aggregate cardinal value of the knowledge graph 150 and total cost simultaneously.

The prioritization engine 146 can solve the optimization problem(s) to generate an ordered list of nodes 151 to improve based on priority. The prioritization engine 146 can provide this list to the user terminal 116, e.g., for presentation by a user interface of the user terminal 116.

The analytical engine 142 can receive queries 117 from user terminals 116 (e.g., client computers) and provide node data 118 in response to the queries. The queries 117 can be related to nodes 151 in the knowledge graph 150. For example, a query can request a list of computers that need immediate attention. These computers can be computers that potentially compromise critical servers, e.g., servers represented by target nodes. The analytical engine 142 can evaluate the knowledge graph 150 to identify the nodes having the highest cardinal values. In some implementations, the queries 117 can specify particular targets, e.g., particular servers. In this example, the analytical engine 142 can evaluate the knowledge graph 150 to identify the nodes that are on a path to the specified targets and that have a high (e.g., greater than threshold or higher than other nodes) cardinal value. The analytical engine 142 can respond to each query 117 with node data 118 specifying the nodes that match the query 117. This enables a user (e.g., network security personnel) to improve the computing devices that provide the most vulnerability to the targets.

In some implementations, the knowledge graph system 130 can take action to improve the elements represented by priority nodes or nodes identified in response to queries. In a cybersecurity example, the knowledge graph system 130 may determine, based on the type of computing device represented by a node and/or the software installed on the computing device, security software or a software patch that would improve the security of the computing device. The knowledge graph system 130 could either recommend the installation of the software or patch, or automatically install the software or path on the computing device.

For an automatic improvement, e.g., fix, a primitive action that constitutes the improvement can be defined, e.g., by network security personnel. For network security, the action may be the implementation of a security control, such as updating firewall rules, installing software, enabling audit logs, switching specific software configurations (e.g., make antivirus full scan rather than fast scan, and make daily rather than weekly), or other actions that can be performed programmatically. Once these primitive actions are defined, they are mapped to specific issues, e.g., by the network security personnel. Once the issue is detected at a cardinal node, the most effective strategy (which may involve a series of primitive actions) is selected by the system.

The knowledge graph generation engine 136 can update the knowledge graph 150 after elements corresponding to the nodes 151 in the knowledge graph 150 are improved, removed from the system, or the system is otherwise altered. The update may happen either as a next round of system scan, or, alternatively, as simulation run by a user. This update can result in an updated aggregate cardinal value for the knowledge graph 150, e.g., a lower value if the system is improved by the changes. The node prioritization engine 146 can calculate the aggregate cardinal value for each updated knowledge graph and provide this data for presentation at the user terminal 116. For example, the node prioritization engine 146 can generate a graph that plots the aggregate cardinal values over time so that a user can assess the effectiveness of the efforts and resource utilization to improve the system. This can also signal significant changes in the environment and be of help in a Strengths, Weaknesses, Opportunities, and Threats (SWOT) analysis.

In cybersecurity examples, if the aggregate cardinal value of the knowledge graph 150 does not change over time, this likely means that the overall cybersecurity risk is not being mitigated and therefore the resource allocation is likely suboptimal. On the other hand, if there is abrupt spike in the aggregate cardinal value, then it may be a signal a new maj or security issue throughout the organization, e.g., a newly discovered zero day vulnerability.

The graph of the aggregate cardinal values of the knowledge graph 150 can be used to measure the acceleration of decay of the aggregate cardinal value, e.g., the gradient of the value of knowledge graph 150 over time. As such, the changes to the aggregate cardinal value can be used to perform sensitivity analysis for selecting the best node to relax the graph first, namely which node to improve first to create the best relaxation (e.g., fastest, rapid, maximum gradient).

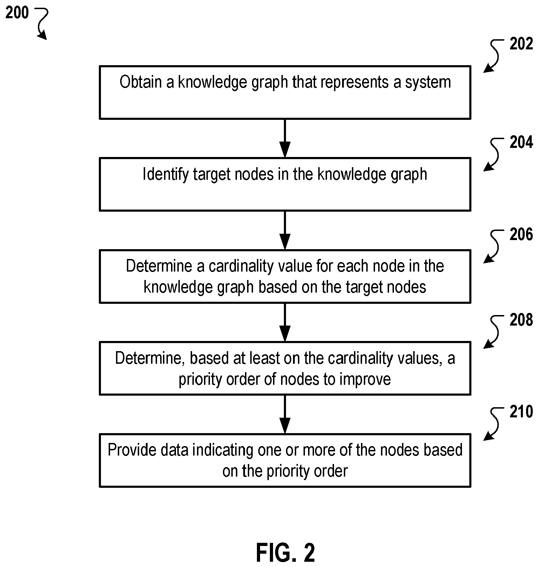

FIG. 2 is a flow diagram of an example process 200 for determining nodes that provide the most impact on actual conditions of a system. The process 200 can be implemented by the knowledge graph system 130. Operations of the process 200 can also be implemented as instructions stored on non-transitory computer readable media, and execution of the instructions by one or more data processing apparatus can cause the one or more data processing apparatus to perform the operations of the process 200. For ease of description, the process 200 will be described as being performed by a system.

The system obtains a knowledge graph (202). The system can receive a pre-generated knowledge graph or generate a knowledge graph based on data collected from one or more data sources. The knowledge graph can include nodes that represent elements of a system and edges the represent relationships between pairs of nodes.

For each node, the knowledge graph can include a value parameter with a value that represents how valuable the element represented by the node is to the overall system represented by the knowledge graph. The knowledge graph can also include, for each node, a cost parameter with a value that represents a cost to improve the element corresponding to the node.

The system identifies target nodes in the knowledge graph (204). The system can identify the target nodes based on the value parameters for the nodes. For example, the system can select, as the target nodes, the nodes having a value parameter with a value that meets or exceeds a threshold. In another example, the system can order the nodes based on the values of the value parameters and select, as the target nodes, a specified number of the nodes having the highest value parameters. In yet another example, a user may select the target nodes.

The system determines a cardinal value for the nodes in the knowledge graph (206). The system can determine a respective cardinal value for each node or for each non-target node. The cardinal value for a node can represent how hard (or alternatively, how easy) it is to traverse the element represented by the node to get to a target node. Importantly, the cardinal values are in terms of the target nodes, not just the vulnerabilities of the nodes themselves.

The system can determine a cardinal value for each node using a combination of multiple factors. The system can determine, for the node, a measure of hardness that represents how hard or easy it is to traverse the node. In cybersecurity examples, the measure of hardness can be based on the operating system of a computer, the security software installed on the computer, the version of the operating system and/or security software, whether particular patches have been installed on the computer, and/or other factors that contribute to how difficult it would be for a malicious party to traverse the computing device represented by the node to move towards a computing device represented by a target node.

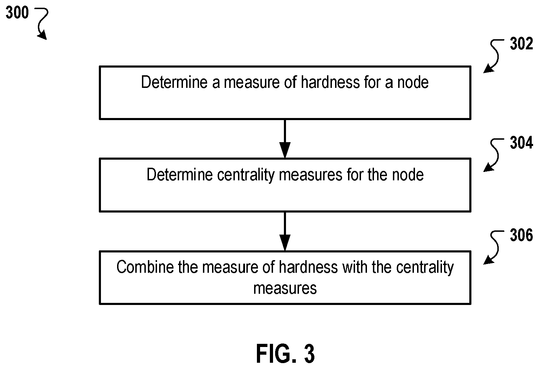

The system can also determine, for the node, one or more centrality measures. The one or more centrality measures can include, for example, degree centrality, eigenvector centrality, Katz centrality, and betweenness centrality. The system can then determine, as the cardinal value for the node, a combination of the measure of hardness and one or more of the centrality measures. There are multiple ways to combine the measure of hardness and the centrality measure(s). An example process for determining the cardinality measure for a node is illustrated in FIG. 3 and described below.

The system determines, based at least on the cardinal values for the nodes, a priority order of nodes to improve (208). In one example, the order can be based only on the cardinal values as the cardinal values represent the potential impact the nodes have on the target nodes. In another example, the system can generate an optimization problem and solve the problem to meet an objective. For example, the system can generate a constrained optimization problem to minimize (or at least reduce) the aggregate cardinal value of the knowledge graph subject to cost constraints (e.g., based on the cost for each node). In another example, the system can generate a multi-objective optimization problem to minimize (or at least reduce) the aggregate cardinal value of the knowledge graph and total cost simultaneously.

In some implementations, the system can also use contextual information to generate the order. For example, if an element that would otherwise be at the top of the order cannot be taken out of service or otherwise cannot not be improved at the time, the system can lower that node in the order and prioritize other nodes.

The system provides data indicating one or more nodes based on the priority order (210). For example, the system can provide, for presentation at a user terminal or other client device, an ordered list of the one or more nodes that have the highest priority based on the order. The ordered list can include, for each of the one or more nodes, the cardinal value and cost of improving the node.

FIG. 3 is a flow diagram of an example process 300 for determining a cardinal value for a node in a knowledge graph. The process 300 can be implemented by the knowledge graph system 130. Operations of the process 300 can also be implemented as instructions stored on non-transitory computer readable media, and execution of the instructions by one or more data processing apparatus can cause the one or more data processing apparatus to perform the operations of the process 300. For ease of description, the process 300 will be described as being performed by a system.

The system determines a measure of hardness for the node (302). The measure of hardness can represent how hard or easy it is to traverse the node. In cybersecurity examples, the measure of hardness can be based on the operating system of a computer, the security software installed on the computer, the version of the operating system and/or security software, whether particular patches have been installed on the computer, and/or other factors that contribute to how difficult it would be for a malicious party to traverse the computing device represented by the node to move towards a computing device represented by a target node.

The system determines one or more centrality measures for the node (304). One centrality measure can be a degree centrality measure that is based on a quantity of incoming edges to the node and/or a quantity of outgoing edges from the node. For example, the degree centrality measure can be equal to a sum of the incoming edges and the outgoing edges, normalized to a specified value range.

Another centrality measure is an eigenvector centrality measure. The eigenvector centrality measure represents the influence of the node in the graph. The eigenvector centrality measure for a node can based on the concept that high-scoring nodes contribute more to the score of the node in question than equal connections to low-scoring nodes. Thus, the eigenvector centrality measure for a given node can take into account the value parameter of each node to which the given node is connected.

Another centrality measure is a Katz centrality measure. The Katz centrality measure is similar to the eigenvector centrality measure but assigns lower values for connections to faraway nodes (e.g., nodes that are at least a threshold number of hops through other nodes away from the subject node). Thus, the Katz centrality measure for a given node can be based on, for each node to which the given node is connected, a combination of the value parameter for the node and the number of nodes between the given node and the node. The Katz centrality measure can be used with the eigenvector centrality measure or as an alternative to the eigenvector centrality measure when distant connections matter less (e.g., in a social network example).

Another centrality measure is a betweenness centrality measure. The betweenness measure for a node is based on the number of times the node acts as a bridge along a shortest path between two other nodes. In general, the betweenness centrality measure (as other centrality measures) does not consider specific targets.

The system combines the measure of hardness with at least one of the centrality measures to determine the cardinal value for the node (306). In some implementations, the system combines the hardness measure with multiple ones of the centrality measures. There are multiple possible ways of combining the measure of hardness with the centrality measures.

In one example, the system uses a simple average aggregation to combine the measure of hardness with the centrality measures. In this example, the system normalizes each measure to a particular range and determines, as the cardinal value, the average of the normalized values.

In another example, a user defines a multi-objective optimization problem. The system (or user) can determine the weights of each parameter, e.g., the measure of hardness and centrality measures, by solving the multi-objective optimization problem. The function may be defined as a linear function of node features (e.g., hardness, centrality measures, other domain-specific features) constrained within the range [0,1] (e.g., with sigmoid function) to symbolize the need to remove the node (0) or leave the node (1). Oher ranges can also be used. In cybersecurity examples, the two objectives to minimize may be the overall risk of the target nodes (e.g., expressed in terms of how hard it is to exploit the node) and the aggregate loss that would potentially occur if the target nodes are reached. The system can then use the weights along with the feature values to calculate the cardinal value of each node.

In another example, if historical data is available, the system can use a probabilistic graphical model to combine the measures. For example, the system can generate a Bayesian network based on historical data specifying the paths taken to traverse the elements represented by the knowledge graph. The system can then use simulation techniques, e.g., Monte Carlo simulation techniques, to mimic the graph traversal. Having simulated the paths, the system can calculate the contributions of individual parameters to the likelihood of reaching the targets. The system can then combine the measurements for the node based on the calculated contributions.

In another example, a user can define how the measures are combined. For example, the user can assign weights to each measure based on the importance of that measure, e.g., based on business considerations. For example, a node without incoming edges is typically a starting node for a cyberattack. A node without any outgoing edges is typically and end target (e.g., sink). A goal of the optimization may be to remove any cardinal node to a sink only node (e.g., a node without any output edges). Once the cardinal value is determined for every node, the cardinal values can be used to answer many types of questions about the knowledge graph. For example, in cybersecurity examples, a node that has a high cardinal value (e.g., a cardinal value that is greater than a threshold), yet does not have any incoming edges, is very likely to be an attacker's entry point and should be dealt with accordingly.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the user device, which acts as a client. Data generated at the user device, e.g., a result of the user interaction, can be received from the user device at the server.

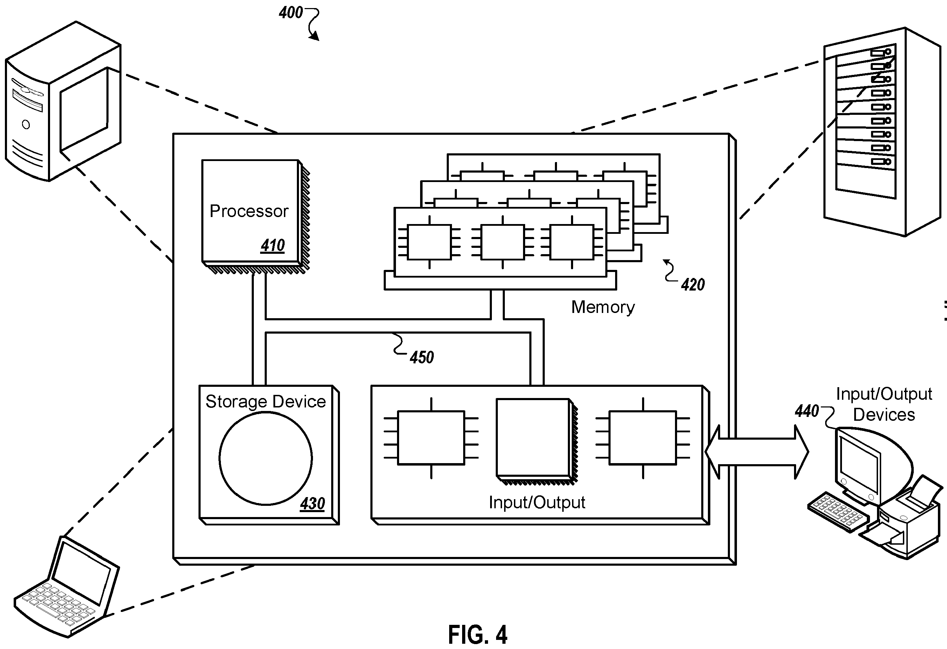

An example of one such type of computer is shown in FIG. 4, which shows a schematic diagram of a generic computer system 400. The system 400 can be used for the operations described in association with any of the computer-implemented methods described previously, according to one implementation. The system 400 includes a processor 410, a memory 420, a storage device 430, and an input/output device 440. Each of the components 410, 420, 430, and 440 are interconnected using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430 to display graphical information for a user interface on the input/output device 440.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 may be a floppy disk device, a hard disk device, an optical disk device, or a tape device.

The input/output device 440 provides input/output operations for the system 400. In one implementation, the input/output device 440 includes a keyboard and/or pointing device. In another implementation, the input/output device 440 includes a display unit for displaying graphical user interfaces.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
obtaining a knowledge graph that represents a given system and that includes a plurality of nodes that each represent an element of the given system;
identifying, in the knowledge graph, one or more target nodes based on a value parameter for each node in the knowledge graph;
determining, for each node in the knowledge graph, a cardinal value that represents an impact that the node has on the one or more target nodes;
determining, based on the cardinal values, a priority order of the nodes for improvement; and
providing data indicating one or more of the nodes based on the priority order.

2. The computer-implemented method of claim 1, further comprising performing an action to improve a given element of the given system represented by one of the one or more nodes based on the priority order of the nodes.

3. The computer-implemented method of claim 2, wherein:
the given system comprises a computer network and each element comprises a computing element in the computer network; and
performing the action comprises installing security software on the computing device represented by the given node.

4. The computer-implemented method of any of claims 1 to 3, wherein the impact that the node has on the one or more target nodes represents a likelihood of a malicious party reaching the element represented by each target node by traversing the element represented by the node.

5. The computer-implemented method of any of the preceding claims, wherein the cardinal value for each node is based on a measure of hardness representing a difficulty of traversing the element represented by the node to get to the element represented by each target node.

6. The computer-implemented method of claim 5, wherein the cardinal value for each node is based on the measure of hardness for the node and one or more centrality measures for the node.

7. The computer-implemented method of claim 6, wherein the one or more centrality measures comprises at least one of degree centrality, eigenvector centrality, Katz centrality, or betweenness centrality.

8. The computer-implemented method of claims 6 or 7, wherein determining the cardinal value for each node comprises determining an average of the measure of hardness for the node and each of the one or more centrality measures for the node.

9. The computer-implemented method of any of the preceding claims, wherein identifying the one or more target nodes comprises selecting, as the one or more target nodes, each node that has a value parameter that exceeds a threshold.

10. The computer-implemented method of any of claims 1 to 8, wherein identifying the one or more target nodes comprises selecting, as the one or more target nodes, a specified number of nodes having higher value parameters than each other node.

11. A computer-implemented system, comprising:
one or more computers; and
one or more computer memory devices interoperably coupled with the one or more computers and having tangible, non-transitory, machine-readable media storing one or more instructions that, when executed by the one or more computers, perform operations comprising:
obtaining a knowledge graph that represents a given system and that includes a plurality of nodes that each represent an element of the given system;
identifying, in the knowledge graph, one or more target nodes based on a value parameter for each node in the knowledge graph;
determining, for each node in the knowledge graph, a cardinal value that represents an impact that the node has on the one or more target nodes;
determining, based on the cardinal values, a priority order of the nodes for improvement; and
providing data indicating one or more of the nodes based on the priority order.

12. The computer-implemented system of claim 11, wherein the computer instructions, when executed by the one or more computers, perform the method of any of claims 2 to 10.

13. A non-transitory, computer-readable medium storing one or more instructions executable by a computer system to perform operations comprising:
obtaining a knowledge graph that represents a given system and that includes a plurality of nodes that each represent an element of the given system;
identifying, in the knowledge graph, one or more target nodes based on a value parameter for each node in the knowledge graph;
determining, for each node in the knowledge graph, a cardinal value that represents an impact that the node has on the one or more target nodes;
determining, based on the cardinal values, a priority order of the nodes for improvement; and
providing data indicating one or more of the nodes based on the priority order.

14. The non-transitory, computer-readable medium of claim 13, wherein the computer instructions, are executable by a computer system to perform the method of any of claims 2 to 10.
